(19)

**Europäisches Patentamt**
**European Patent Office**
**Office européen des brevets**

(11) **EP 2 175 404 A1**

(12) **EUROPEAN PATENT APPLICATION**

(43) Date of publication:
**14.04.2010 Bulletin 2010/15**

(51) Int Cl.:
***G06Q 10/00*** *(2006.01)*

(21) Application number: **08305628.3**

(22) Date of filing: **01.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Amadeus S.A.S.**
**06902 Sophia Antipolis Cedex (FR)**

(72) Inventors:
• **Berthaud, Sebastien**
  **06600, Antibes (FR)**
• **Prezet, Hervé**
  **06250, Mougins (FR)**

(74) Representative: **Coret, Sophie V.G.A.**
**Murgitroyd & Company**
**55, Allée Pierre Ziller**
**06560 Valbonne Sophia Antipolis (FR)**

(54) **A method and system for building an offer of optimal services for a given service or product**

(57) A method of guaranteeing a set of valid additional services or products to offer to a user, which additional services or products are associated with a main service or product, the method comprising: building an affinity matrix of a plurality of additional services and products to attribute an affinity level between each additional service or product with at least one other additional service or product based on the association with the main service or product; determining a coherence level between the additional services or products and the main service or products such that an additional service or product can be marked as valid if the coherence level meets a predetermined level; and generating the set of valid additional services or products to offer to the user based on the affinity level and the coherence level.

*Fig. 3*

**EP 2 175 404 A1**

**Description**

<u>Field of the invention</u>

The present invention relates to a method and system for building an offer of optional services for a given service or product, particularly but not exclusively, in the travel environment.

<u>Background of the invention</u>

In many commercial environments it is known that a seller may wish to sell optional, additional services to accompany the purchase of a main service or product. This is now beginning to develop in the travel industry, where optional services can be linked with the travel products, such as the flight, hotel room, hire car or whatever. Generally offering optional services linked to flights and fares of an air journey are quite restricted. The offering may deal only with basic services, such as unaccompanied minor, medical services etc, where the services are priced manually at the time of buying a ticket. This can be time consuming and error ridden. In addition, such services are not only restricted, they can also not be extended in any way which would be of value to the client.

US 7,092,892 relates to a vending service which dynamically builds a service offer in relation to an air journey. The services concerned are independent from the trip itself and deal with potential activities outside the air journey, for example car rental, hotels and visits.

US 5,832,451 discloses a method for automatically retrieving a business or individual profile from a plurality of computer reservation systems through databases related to the preferences of the customer. The method avoids the need to search in different databases to receive different criteria relating to the business or individual.

The prior art does not address the technical complexity of the problem which occurs in offering optional services with the main service in a travel environment. This is due to the large number of potential different services and the combinations that might be generated by combining different services with each other. For example for a standard air journey of 4 flights, there will be eight via points (departure or destination points). Assume that there are two fares and that the airline offers an average of 10 service items per flight, 10 service items per fare, 10 service items per via points and 10 items per itinerary, then the number of possible combinations of service will be of the order of 10 to the 18. To manage this amount of computation and data would take significant processing time, which is completely undesirable in the real-time selling environment for a flight ticket. It should be noted, that the example above is a relatively simple example and still relates to a significant processing time. For more complex examples even greater processing time and resources would be required.

One aspect of the present invention is to overcome at least some of the problems associated with the prior art.

A further aspect of the present invention is to provide a system and method for offering optional services with the main service or product that is intelligently managed and requires significantly less processing, time and data.

<u>Summary of the invention</u>

The present invention provides a method and system for building a consistent offer, as described in the accompanying claims.

According to one aspect of the present invention there is provided a method of guaranteeing a set of valid additional services or products to offer to a user, which additional services or products are associated with a main service or product, the method comprising: building an affinity matrix of a plurality of additional services and products to attribute an affinity level between each additional service or product with at least one other additional service or product based on the association with the main service or product; determining a coherence level between the additional services or products and the main service or products such that an additional service or product can be marked as valid if the coherence level meets a predetermined level; and generating the set of valid additional services or products to offer to the user based on the affinity level and the coherence level.

According to a second aspect of the present invention there is provided a system for generating a set of valid additional services or products to offer to a user, which additional services or products are associated with a main service or product, the system comprising: a module for building an affinity matrix of a plurality of additional services and products to attribute an affinity level between each additional service or product with at least one other additional service or product based on the association with the main service or product; a coherence determining module for determining a coherence level between the additional services or products and the main service or products such that an additional service or product can be marked as valid if the coherence level meets a predetermined level; and a generating module for generating the set of valid additional services or products to offer to the user based on the affinity level and the coherence level.

Brief description of the drawings

Reference will now be made, by way of example, to the accompanying drawings, in which:

Figure 1 is a table representing group, subgroup and description of services, given by way of example,

Figure 2 is a graphical representation of an air journey, in accordance with an embodiment of the invention, given by way of example,

Figure 3 is a block diagram of a system overview, in accordance with an embodiment of the invention, given by way of example,

Figure 4 is a graph for describing an overlap check, in accordance with an embodiment of the invention, given by way of example,

Figure 5 is an example of an affinity check, in accordance with an embodiment of the invention, given by way of example,

Figure 6 is a graph for describing a short offer unit check, in accordance with an embodiment of the invention, given by way of example,

Figure 7 is a flow chart showing the method steps, in accordance with the present invention, given by way of example.

Detailed description of the preferred embodiments

The present invention relates to a system or method for dynamically building an offer of optional services for a given service or product. For example, optional services available for a given price air ticket. The offer can be provided through a ticket vending device to a customer in order that the customer can be offered optional services at the same time as purchasing the ticket. The ticket vending devices may include a Graphic User Interface on any appropriate devices, such as a computer reservation system user interface hosted on a web site, for example. The invention can apply to any ticket vending device or any other appropriate sales channel for either travel goods and services or other goods and services.

The manner in which the optional service offer is built may be specific to each subscribing vendor, for example an airline, but will be based on an industry standard as is described below.

Industry standards have been proposed in order to structure how optional services of defined, priced, sold and how the sales are reported in the air ticket domain. One standard is proposed by company known as ATPco but it does not go into any details of how such a system or method would be implemented. In accordance with the standard, the service offer is structured from service items that are defined by any airline subscribing to the industry standard. Each service item is referenced within the system and includes the following 4 types of information: a service type; a commercial description of the service item; price and pricing restrictions of the service item; and concurrency agreements between the airlines regarding the type of service delivery.

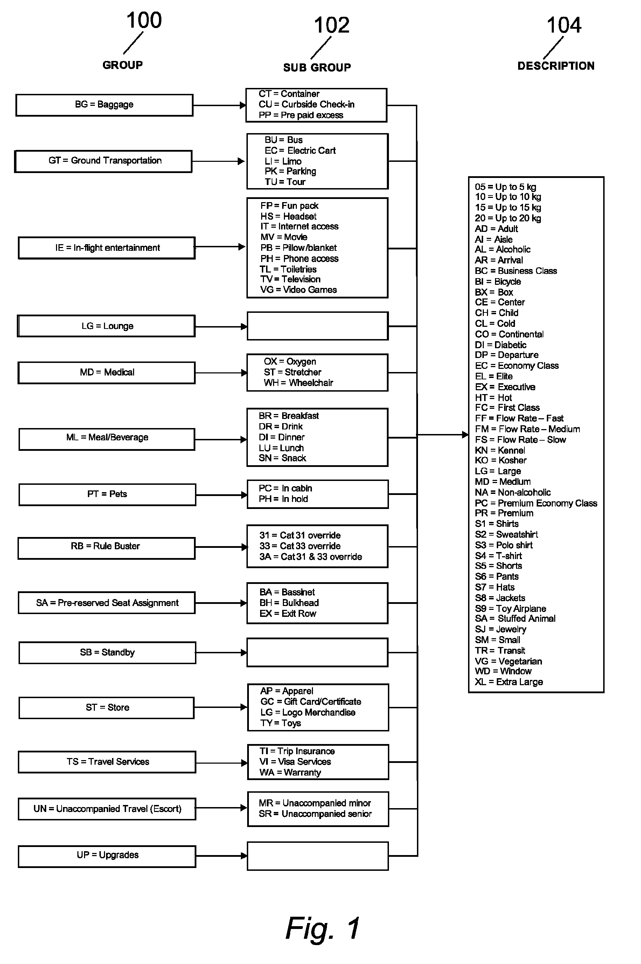

The service type drives both the pricing and the way the service applies to an air journey and can take 4 different values, for example: fare related services; flight related services; ticket related services; and merchandise related services. The commercial description of the service item is made up of a service group, a service subgroup and two descriptive attributes (for example 2 letters). The commercial description is standardized as is shown in Figure 1, and shows the groups 100 subgroups 102 and the descriptions 104. Further detail and the manner in which this will be used will be described in greater detail below.

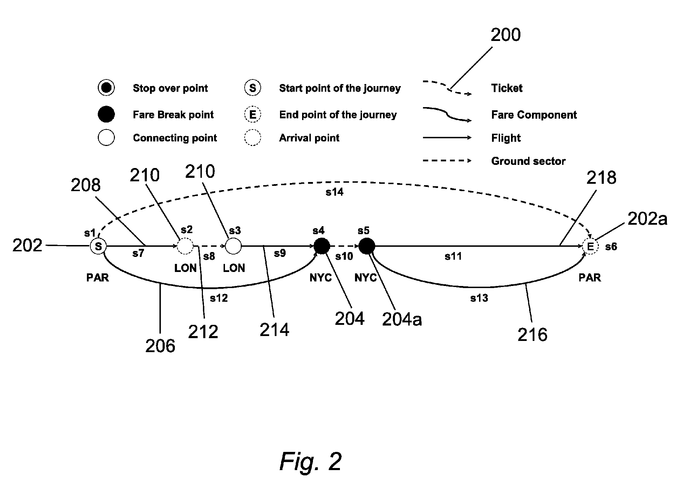

A graphical representation of an air journey may also be useful, for example Figure 2 shows a round trip from Paris to New York with a transit in London on the outbound leg of the journey. The tickets 200 related to a journey from a starting point 202 and a destination point 204 for a first leg 206. The first leg includes a flight 208 and a stopover point 210. After some time in transit 212 at the stopover point, a second flight 214 departure from the stopover point 210 to continue the journey to the destination 204. At a certain point in time the client returns to the original starting point 202a having departed from the original destination point 204a. This part of the journey takes route 216 via a single flight 218. For each point in the journey, each flight, each route, etc there are services that may relate thereto. These are each shown as s1, s2, etc to s14. Each node or point on the diagram represents a geographical point and can be said to constitute a node definition. The geographical point could be a stop point, a connecting point, a start or stop point or any other juncture in the journey.

In addition to the node, there is an edge definition represented between two geographical points. A flight edge between two geographical points means that the journey includes a flight between these two points. Similarly a fare component edge between two geographical points means there is a fare component starting from the first point and ending at the second. A ticket edge links the start point and endpoint of the ticket which in this case is a round trip and therefore starts and ends at the same place. A ground sector edge links an arrival point to the next departure point. The ground sector can represent a short stay at a connecting points or a longer stay between two air journeys (i.e. an arrival and subsequent departure). In order to be consistent the ground sector is also seen as a fare edge, a flight edge and a ticket edge.

A further definition is the path definition for fares, flights and tickets. A fare path is a set of fare edges connecting two fare break nodes that may include the ground sector. A flight path is a set of flight edges connecting two nodes that may include the ground sector. A ticket path is a set of ticket edges connecting the start point of the ticket to the endpoint to the ticket.

As previously indicated a service can be associated with any edge or any node. In order for further consistency the standard defines the sales channels through which a ticket may be sold and provided to the traveler. A direct channel is one in which the ticket is sold by the airline itself; a travel agency is one in which ticket is sold through the action of the travel agents; and an online travel agency is one in which the ticket is sold through the action of an online travel agent or website.

The nomenclature and rules of the standard are used throughout the present invention in order that the invention will be capable of supporting the standard and therefore be adaptable in many different systems and apparatus.

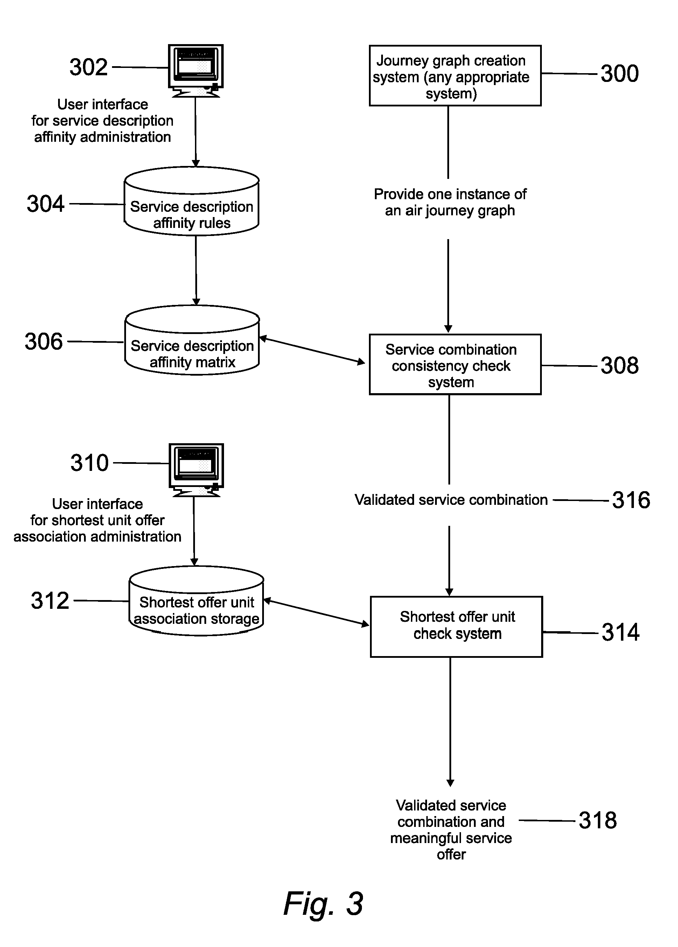

Referring now to Figure 3, the system overview will be described. A journey graph will be created by an appropriate journey graph creation system 300. The journey graph will be of the format described in Figure 2 and will be used to determine the available services in order to offer a consistent service offer. A user interface 302 is used to administer service description affinity rules. Affinity rules are rules between different services which produced a linkage between different services, such that they may be offered together in certain circumstances. Further details of affinity rules and the generation of an offer will be described in greater detail below. The user interface 302 produces service description affinity rules 304 and subsequently a service description affinity matrix 306.

A second user interface 310 is used to administer shortest unit offer association. The shortest offer unit is the shortest journey part on which the service offer is meaningful. A service offer is meaningful if it relates to the part of the journey which is appropriate to offer to the user. This may be explained by means of the following examples. In other words, if the service is transporting a snowboard the shortest journey over which this offer is meaningful must be the whole of the trip. On the other hand, the offer is for a movie it only has to relate to one particular flight or node, to be meaningful. The second user interface 310 produces a database of shortest offer unit association 312. It will be appreciated that the two user interfaces (302 and 310) could be a single entity and the databases 304, 306 and 312 could also be a single entity.

A service combination consistency check system 308 processes the journey graph and compares available services with the service description affinity matrix in order to generate a validated service combination 316, which can be offered to a user. A shortest offer unit check 314 then compares a valid service combination 316 with the shortest offer unit association 312, in order to generate a validated service combination that is meaningful 318.

As previously indicated each service available from an airline includes a description of the service content in the form of a service group, a service group and the two letter code describing the attributes as described with reference to Figure 1.

Based on the possible values for each service group, sub-group and attributes as defined above, a set of discrete service descriptions **D** is created. Each service description is then represented by a set:

**(service group, service sub group, attribute 1, attribute 2).**

An example is a valid service description which could be considered is the functional description for a pre-paid excess baggage voucher for a journey including connecting flights on business class. This may be expressed as:

**(Baggage, Pre paid excess, Business Class, Transit)**

Then for each pair of descriptions $(d_i, d_j)$ in the discrete set **D**, a functional analysis based on the descriptions can determine if the two services with corresponding description could be combined together to make a meaningful service offer.

For example the service description **(Lounge, _, _, _)** has an affinity with the service description **(Upgrade, _, First Class, _).** In fact the combination of lounge access on a subpart of the itinerary with a Flight Upgrade on another part of the itinerary can lead to meaningful "upgrade" service being offered. This can occur in any situation where there is a meaningful link between the two or more services being offered.

Throughout the description, the Service Description Affinity Matrix is referred to as **A**. Any two service items

$s_i$ $s_j$ then have an affinity if **A[$d_i$, $d_j$] > 0**, where **$d_i$, $d_j$** are the description of the services **$s_i$ $s_j$.**

Based on the number of possible service descriptions the size of the affinity matrix can be determined. There are approximately 40,000 descriptions in existence based on the current industry standard and as a result the affinity matrix is a 40,000 by 40,000 cell matrix. The storage of the affinity matrix is then automated using the affinity rules. An affinity rule is the description of two subsets of service description **S₁ S₂**, such as every service description of the set **S₁** has an affinity with every service of the set **S₂.**

The following is an example of a valid affinity rule: the service descriptions with the group Meal and the sub group Snack (represented by **(Meal, Snack, *, *))** have an affinity with the service descriptions with the group Meal and the sub group Lunch (represented by **(Meal, Lunch,** *, *). The affinity is stored in the affinity matrix in respect of each group and subgroup.

The storage of the service description affinity matrix is carried out using the affinity rules. The affinity rules are provided by a system administrator via a user interface system. The user interface system has the capability to analyse the affinity rules and to store the corresponding service description affinity matrix.

In addition to the affinity rules, a service combination consistency check system is provided by the present invention. The system works on a graphical representation of a subpart of the air journey described in Figure 2 above. The sub-part of an air journey can be provided by any system of air journey construction or search. The mechanism for this can be split in two parts. The first part is an overlap check, which insures that the same service is not offered twice on the same subpart of the journey by the use of different service levels (e.g. fare, flight, ticket, etc.). The second part is an affinity check which determines the affinity of the service combination on the journey graph, and checks that the affinity is >0.

As previously indicated the overlap check ensures a service is not offered twice on the same single sub part. The overlap check is carried out on two separate levels. Given two adjacent fare break points, the service items associated with the fare path must have a different functional description than the services associated with the flight path. This can be represented mathematically as follows:

$$\forall \text{ fare break nodes } A,B, \{d_s\ s \in \text{ fare path } A{\to}B\} \cap (d_t\ t \in \text{ flight path } A{\to}B\} = \varnothing$$

Given two adjacent ticket start points and end points, the service items encountered on the ticket path between these points must have a different functional description than the service encountered on the fare path and the flight path. This can be expressed mathematically as follows:

$$\forall S \text{ start point}, \forall E \text{ end point},$$
$$\{d_t\ t \in \text{ ticket path } S{\to}E\} \cap (d_u\ u \in \text{ flight path } S{\to}E\} \cup$$
$$\{d_t\ t \in \text{ ticket path } S{\to}E\} \cap (d_u\ u \in \text{ fare path } S{\to}E\} = \varnothing$$

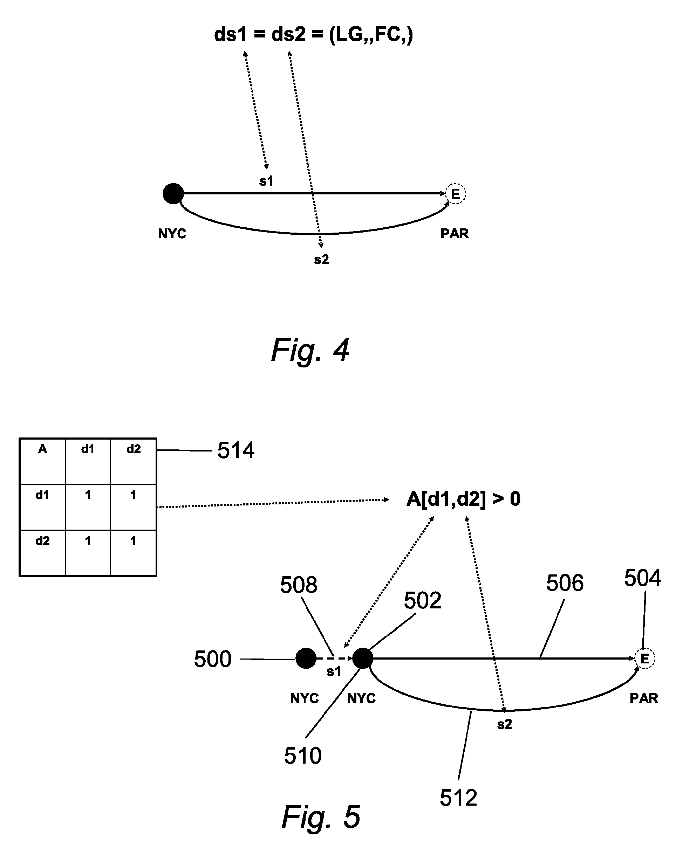

Figure 4 shows an example of invalid journey graph regarding the overlap check. In this example, the two services s1 and s2 are the same. The only difference is that one is being offered as part of the fare and one as part of the flight. This is not allowed and only one of the two services S1 and S2 will be offered to the user.

Referring now to Figure 5, an example of an affinity check will now be described with reference to part of the journey. The journey starts with a period of time at New York airport terminal 500 followed by a flight taking off 502. The route 506 then proceeds to a destination for example, Paris 504. During the time in the terminal in New York the user may be offered a service, for example an executive dinner 508. In addition, during the time at the airport the user may also be offered a service linked with the node, for example entry to a lounge 510. Subsequently during the flight the customer may be offered a flatbed 512. The three services (dinner 508, lounge 510, flatbed 512) are all "high end" services and as such are appropriate services to have an affinity link. This link may be predefined by an airline and stored in an appropriate affinity matrix 514. In addition, a link may also be made with ticket type, for example Business or first class.

To ensure the proposed combination of services is consistent, the mathematical processing proceeds for any given node **N** (for example take off 502) on the graph of the air journey. The definitions used in the formula below are as follows: **$S_t$** (508) is the service linked to the edges going to the node **N** (in other words an executive dinner is offered before the flight); $S_f$ (512) is the service linked to the edges going from the node **N** (in other words a flatbed is offered during the flight); and $S_a$ (510) is the service linked to the node **N** (in other words a lounge reservation is made at the terminal before the flight takes off). Then for each pair of services chosen in the combination set of $S_t$, $S_f$, $S_a$, the functional description of at least two of these services must have an affinity together, as expressed below.

$$\forall\, s \in S_t \cap S_f \cap S_a,\ \forall\, u \in S_t \cap S_f \cap S_a,\ A[d_s, d_u] > 0$$

Having established the affinity links with the combination of services offered to a user, the shortest offer unit has to be checked to ensure that the service combination corresponds with the shortest offer unit as defined for each service functional description. As previously identified, this shortest offer unit is the physical unit length of the service, which can take for example any of the following values: a flight edge; a path between two stop points; the whole journey from the start point to the end point; a connecting point; a stop point, etc. The shortest offer unit defines the shortest journey subpart on which the service offer is meaningful.

An example of the shortest offer unit can be explained by means of a specific baggage handling service which can only be offered between two particular stop points, but cannot be offered on two adjacent connecting points. For example, if the system believes the user may wish to take the snowboard on a journey comprising two different flights it is necessary that both flights can accommodate the snowboard. If one of the flights has insufficient space for a snowboard, offering to transport the snowboard as a service would be meaningless. The user would not want to take part in the journey if he wished to travel the snowboard, if the snowboard cannot be carried on all parts of the journey. In this case the shortest offer unit for transporting a snowboard must be the whole journey and thus the service may only be offered if the whole journey can accommodate the snowboard. The determination of shortest offer unit effectively determines whether there is any "coherence" with offering the additional services with the ticket that has been purchased. The level of coherence may be a measure which is discrete or continuous. In certain examples (e.g. the snowboard) the coherence will be discrete. In other words "Yes" the service can be offered, or "No" it cannot. With other services the coherence may be more continuous. For example not being able to provide a bed during a day time short flight may not be as critical as not being able to provide a bed during an overnight long haul flight.

For each service description, a parameter called "same service longest path" exists and is defined as a set of adjacent edges and nodes in which all services encountered on the edges and the nodes of the path have the same description and in which the nodes of the path are not connected to any other edge with the same service description. Part of the process for the overlap check requires that each node of the graph is connected to only one "same service longest path". There can be several "same service longest paths" for a given service description.

The working of the system and method of the present invention in the graphical representation of air journey as described in Figure 2. The sub-part or parts of the air journey can be provided by any appropriate system. The system lists all the different service descriptions used on the nodes and edges of the graph. For each of the listed service description, the "same service longest path" is determined by an appropriate computing means. Subsequently, each "same service longest path" is compared with the shortest offer unit for the service description. If the path includes an example of a shortest offer unit, then the service offer is validated.

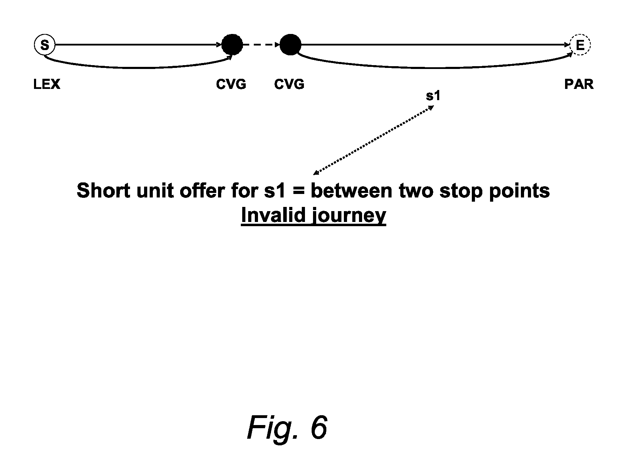

Referring now to Figure 6, a short offer unit check is shown for an invalid construction in which the s1 service is for handling a specific piece of luggage with the journey being the short offer unit. As such, the service s1 can be offered only between a connecting point and a stop point, as all other points will be meaningless.

The association between the service functional description and the shortest offer unit is carried out asynchronously by the system administrator for a subscribing airline. The association is created using a dedicated user interface and stored using a shortest offer unit association storage system.

One potential application of the present invention is the sale of optional services which can be selected from a dynamically built service catalogue in combination with an air travel purchase using a vending device such as a website. The sale is carried out in the following way. The end-user connects to the web site and selects a required destination and date of travel. This is launched as a web search and results in a list of potential journey recommendations matching the user's requirements. The user may then select one of the recommendations for purchase. The invention then proceeds to dynamically create a consistent and accurate optional services offer that can be offered to the user as additional purchases associated with the journey. The additional or optional services are presented in a catalogue and include the prices relevant to each service and can be displayed in any appropriate way to the user. If the user is interested in any of the optional services he may select them and pay for them in conjunction with payment for tickets for the journey.

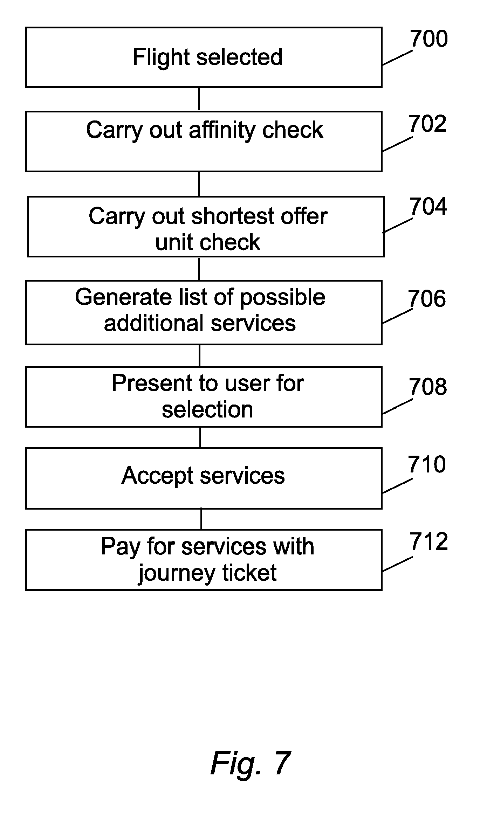

According to Figure 7 a more detailed flowchart of the steps for defining the optional services is illustrated. At step 700 the user selects a flight. The system then carries out an affinity check (702) in order to identify possible services that have an affinity with the appropriate selected flight. In addition, the various service elements may also be selected in accordance with an affinity for one another. The system then carries out the shortest offer unit check (step 704). This check is to ensure that the services that match the required affinity can meaningfully be offered in respect of the shortest offer unit. As a result of the two checks (702, 704) the system generates a list of possible additional services which can be presented to the user (step 706). The list is then presented to the user for selection if required (step 708). If the user selects additional services these may be accepted and added to the "shopping basket" of the user (step 710). At step 712, the user then pays for the services along with the journey ticket; and relevant receipts and documentation are produced.

The present invention offers significant advantages over the prior art. The present invention allows an optional service offer to be built based on optional service data provided by an airline that complies with the industry standards. In addition, the invention provides systems and methods to dynamically build the optional service for a given priced air journey based on a number of different checks. The optional services can apply to the whole journey, subpart of the journey or any other node or point in the journey. The checking systems ensure that the offered services are accurate, consistent and add value for the user. The system and method are very versatile and are available through all appropriate sales channels.

A further advantage of the present invention is the provision of a service description affinity matrix which can determine if two services have commercial descriptions that are functionally close, so that the corresponding services can be bundled in a meaningful service offer for a particular journey. The service combination consistency computing system guarantees that the service item combination is consistent on any or all parts of the itinerary. The shortest offer unit check system determines the shortest journey unit on which the service can be meaningfully offered. Beyond this unit the service is considered to be not saleable as the service is meaningless on any shorter travel unit. The shortest offer unit association storage aims to store the service descriptions with the shortest offer unit to expedite certain parts of the system and method when operating.

This invention has been applied to the purchase of tickets in the travel environment. However, it will be appreciated that the invention may apply to other environments, for example any situation where optional or additional services or products can be sold with a main product or service. The use of the term travel ticket as used herein is intended to cover all main products or services which can be offered in conjunction with additional services or products, for example a travel journey, including airline tickets, hotels, car hire etc., or any other appropriate product or service, whether associated with travel or not.

Furthermore, a person skilled in the art will understand that some or all the functional entities as well as the processes themselves may be embodied in software, or one or more software-enabled modules and/or devices. Also process steps may be carried out by appropriate and equivalent modules even if these are not identified herein per se.

It will be appreciated that this invention may be varied in many different way and still remain within the intended scope and spirit of the invention.

## Claims

1. A method of guaranteeing a set of valid additional services or products to offer to a user, which additional services or products are associated with a main service or product, the method comprising:-

   - building an affinity matrix of a plurality of additional services and products to attribute an affinity level between each additional service or product with at least one other additional service or product based on the association with the main service or product;
   - determining a coherence level between the additional services or products and the main service or products such that an additional service or product can be marked as valid if the coherence level meets a predetermined level;
   - generating the set of valid additional services or products to offer to the user based on the affinity level and the coherence level.

2. A method as claimed in claim 1, wherein the step of building an affinity matrix includes applying a predetermined set of affinity rules to the plurality of additional services or products to define the affinity matrix.

3. A method as claimed in claim 1 or claim 2, wherein the affinity rules are predetermined by analyzing the additional services or products to determine a degree of affinity between each, and storing the affinity in the affinity matrix if the degree of affinity meets a predetermined level.

4. A method as claimed in any preceding claim, wherein the coherence level is determined by determining a meaningfulness level for the additional service or product.

5. A method as claimed in any preceding claim, further comprising offering the additional services or products in conjunction with offering the main services or products.

6. A method as claimed in any preceding claim, further comprising providing the main products or services as a travel ticket.

7. A method as claimed in claim 6, further comprising providing the additional services or products as services or products associable with the travel ticket.

8. The method as claimed in claim 7, further comprising linking the additional services or products to any part of a journey.

9. The method of any preceding claim, offering the set of valid additional services or products to a user for selection.

10. The method as claimed in any preceding claim, further comprising receiving the selection of additional services or products from a user.

11. The method as claimed in any preceding claim, further comprising collecting payment for the main product or service and any additional service or product.

12. A computer program comprising instructions for carrying out the method of any of claims 1 to 11, when said computer program is executed on a programmable apparatus.

13. A system for generating a set of valid additional services or products to offer to a user, which additional services or products are associated with a main service or product, the system comprising:-

   - a module for building an affinity matrix of a plurality of additional services and products to attribute an affinity level between each additional service or product with at least one other additional service or product based on the association with the main service or product;
   - a coherence determining module for determining a coherence level between the additional services or products and the main service or products such that an additional service or product can be marked as valid if the coherence level meets a predetermined level;
   - a generating module for generating the set of valid additional services or products to offer to the user based on the affinity level and the coherence level.

14. The system of claim 13, further comprising a display module for offering the set of valid additional services or products to the user for selection.

Fig. 1

Fig. 2

302 — User interface for service description affinity administration

304 — Service description affinity rules

306 — Service description affinity matrix

300 — Journey graph creation system (any appropriate system)

Provide one instance of an air journey graph

308 — Service combination consistency check system

Validated service combination ——316

310 — User interface for shortest unit offer association administration

312 — Shortest offer unit association storage

314 — Shortest offer unit check system

Validated service combination and meaningful service offer ——318

*Fig. 3*

ds1 = ds2 = (LG,,FC,)

s1

NYC

E

PAR

s2

*Fig. 4*

| A | d1 | d2 |
|---|----|----|
| d1 | 1 | 1 |
| d2 | 1 | 1 |

514

A[d1,d2] > 0

508

502

506

504

500

s1

NYC

NYC

E

PAR

510

s2

512

*Fig. 5*

LEX       CVG   CVG               PAR

s1

**Short unit offer for s1 = between two stop points**
<u>**Invalid journey**</u>

*Fig. 6*

```
+---------------------------+
|       Flight selected     |  ⟋700
+---------------------------+
             |
+---------------------------+
|   Carry out affinity check |  ⟋702
+---------------------------+
             |
+---------------------------+
|   Carry out shortest offer |  ⟋704
|        unit check          |
+---------------------------+
             |
+---------------------------+
|   Generate list of possible|  ⟋706
|      additional services   |
+---------------------------+
             |
+---------------------------+
|     Present to user for    |  ⟋708
|         selection          |
+---------------------------+
             |
+---------------------------+
|      Accept services       |  ⟋710
+---------------------------+
             |
+---------------------------+
|   Pay for services with    |  ⟋712
|       journey ticket       |
+---------------------------+
```

*Fig. 7*

Europäisches
Patentamt

European
Patent Office

Office européen
des brevets

## EUROPEAN SEARCH REPORT

Application Number

EP 08 30 5628

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 752 919 A1 (AMADEUS SAS [FR]) 14 February 2007 (2007-02-14) * paragraph [0016] - paragraph [0049] * ----- | 1-14 | INV. G06Q10/00 |
| X | WO 2007/110330 A2 (AMADEUS SAS [FR]; VIALE VALERIE [FR]; RAUFASTE NATHALIE [FR]) 4 October 2007 (2007-10-04) * page 3 - page 23 * ----- | 1-14 | |
| X | US 2006/100914 A1 (JAFRI VAJID H [US] ET AL) 11 May 2006 (2006-05-11) * paragraph [0011] - paragraph [0114] * ----- | 1-14 | |
| X | WO 2007/095030 A2 (CFARES INC [US]) 23 August 2007 (2007-08-23) * page 8 - page 34 * ----- | 1-14 | |
| X | WO 2006/124151 A2 (CFARES INC [US]) 23 November 2006 (2006-11-23) * page 10 - page 34 * ----- | 1-14 | |
| X | IVONA BRANDIC ET AL: "Specification, Planning, and Execution of QoS-Aware Grid Workflows Within the Amadeus Environment" PORTAL - THE GUIDE TO COMPUTING LITERATURE, [Online] 31 March 2008 (2008-03-31), pages 1-2, XP002508701 Retrieved from the Internet: URL:http://portal.acm.org/citation.cfm?id=1348685.1348686> [retrieved on 2008-12-18] * abstract * ----- | 1-14 | TECHNICAL FIELDS SEARCHED (IPC) G06Q |

The present search report has been drawn up for all claims

| Place of search | Date of completion of the search | Examiner |
|---|---|---|
| Munich | 5 January 2009 | Lavin Liermo, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 30 5628

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2009

| Patent document cited in search report | | | Publication date | Patent family member(s) | | Publication date |
|---|---|---|---|---|---|---|
| EP 1752919 | A1 | | 14-02-2007 | AU 2006274903 A1<br>CA 2614611 A1<br>CN 101297309 A<br>EP 1920395 A2<br>WO 2007014870 A2<br>KR 20080065967 A<br>US 2008270254 A1 | | 08-02-2007<br>08-02-2007<br>29-10-2008<br>14-05-2008<br>08-02-2007<br>15-07-2008<br>30-10-2008 |
| WO 2007110330 | A2 | | 04-10-2007 | AU 2007229545 A1 | | 04-10-2007 |
| US 2006100914 | A1 | | 11-05-2006 | NONE | | |
| WO 2007095030 | A2 | | 23-08-2007 | NONE | | |
| WO 2006124151 | A2 | | 23-11-2006 | CN 101198973 A<br>EP 1869629 A2 | | 11-06-2008<br>26-12-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7092892 B

- US 5832451 A